# EUROPÄISCHE PATENTSCHRIFT

(11) **EP 0 930 188 B1**
(45) Veröffentlichungstag und Bekanntmachung des Hinweises auf die Patenterteilung: **24.07.2002**
(21) Anmeldenummer: 98120217.9
(22) Anmeldetag: 26.10.1998
(51) Int. Cl.: B60J 10/10, B60J 7/12, B60J 10/00

(54) **Dichtungseinrichtung für zumindest eine rahmenlose Sichtscheibe eines Kraftfahrzeuges**
Sealing arrangement for at least the frameless window pane of a motor vehicle
Dispositif d'étanchéité pour une vitre de préférence sans cadre pour un véhicule

(30) Priorität: 20.01.1998 DE 19801870
(43) Veröffentlichungstag der Anmeldung: 21.07.1999
(73) Patentinhaber: Dr.Ing. h.c.F. Porsche Aktiengesellschaft, 70435 Stuttgart (DE); CTS Fahrzeug-Dachsysteme GmbH, 21079 Hamburg (DE)
(72) Erfinder: Raisch, Dieter, 71277 Rutesheim (DE); Depfenhart, Friedrich, 71296 Heimsheim (DE); Arnold, Dirk, 72250 Freudenstadt (DE); Kalb, Wilfried, 71229 Leonberg (DE)

(56) Entgegenhaltungen:
- EP-A- 0 258 599
- EP-A- 0 524 447
- EP-A- 0 618 101
- DE-A- 19 531 600
- DE-C- 19 622 953
- DE-U- 29 509 880
- FR-A- 2 580 999

## Beschreibung

Die Erfindung bezieht sich auf eine Dichtungseinrichtung für zumindest eine rahmenlose Sichtscheibe eines Kraftfahrzeuges gemäß dem Oberbegriff des Patentanspruchs 1.

Aus dem DE 295 09 880 U1 geht ein eine Dichtungseinrichtung bildender Dichtkörper für eine rahmenlose Sichtscheibe eines Cabriolets hervor, wobei der Dichtkörper eine profilierte Trägerschiene aufweist, an der zwei durch abschnittsweises Umspritzen gebildete Elastomerprofilstränge ausgebildet sind. Der äußere Elastomerprofilstrang wirkt in Schließstellung der Sichtscheibe und des Verdecks mit der Außenseite der Sichtscheibe und der innere Elastomerprofilstrang mit der Innenseite der Sichtscheibe zusammen. Da die mit der Sichtscheibe zusammenwirkenden Lippenabschnitte in einem einzigen Arbeitsgang hergestellt werden, ist ein Überlappen beider Lippenabschnitte in Fahrzeugquerrichtung nicht möglich, wodurch diese Dichtungseinrichtung in Schließstellung nur eine eingeschränkte Dichtwirkung aufweist.

Aufgabe der Erfindung ist es, an einer Dichtungseinrichtung der eingangs genannten Gattung solche Vorkehrungen zu treffen, daß bei kostengünstiger Herstellung die Dichtwirkung der Dichtungseinrichtung weiter verbessert wird.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung von zwei abschnittsweise umspritzten Trägerschienen aufwendigere Profilquerschnitte und ferner eine Überlappung von Dichtflächen möglich ist, wodurch eine verbesserte Dichtwirkung erzielbar ist. Ein derartiger Dichtkörper läßt sich zudem einfacher herstellen und montieren. Die beiden Trägerschienen lassen sich zueinander einstellen und können so relativ große Toleranzen aufnehmen. Die Verbindung der Trägerschienen kann durch Nieten, Schrauben, Kleben, Schweißen oder dergleichen erfolgen. Durch Anordnung einer Vielzahl von Durchbrüchen an den umspritzten Schenkeln der Trägerschienen erfolgt eine innige, feste Verbindung von Trägerschiene und Elastomerprofilstrang. Durch bereichsweise Verstärkung der Dichtkörper an seinen Endbereichen durch Bildung von geschlossenen Hohlkörperbereichen wird eine weitere Optimierung der Dichtwirkung erzielt.

Ein Ausführungsbeispiel der Erfindung ist in der Zeichnung dargestellt und wird im folgenden näher erläutert.

Es zeigen
- Fig. 1: eine perspektivische Teilansicht von schräg hinten auf eine Hälfte eines Kraftfahrzeuges,

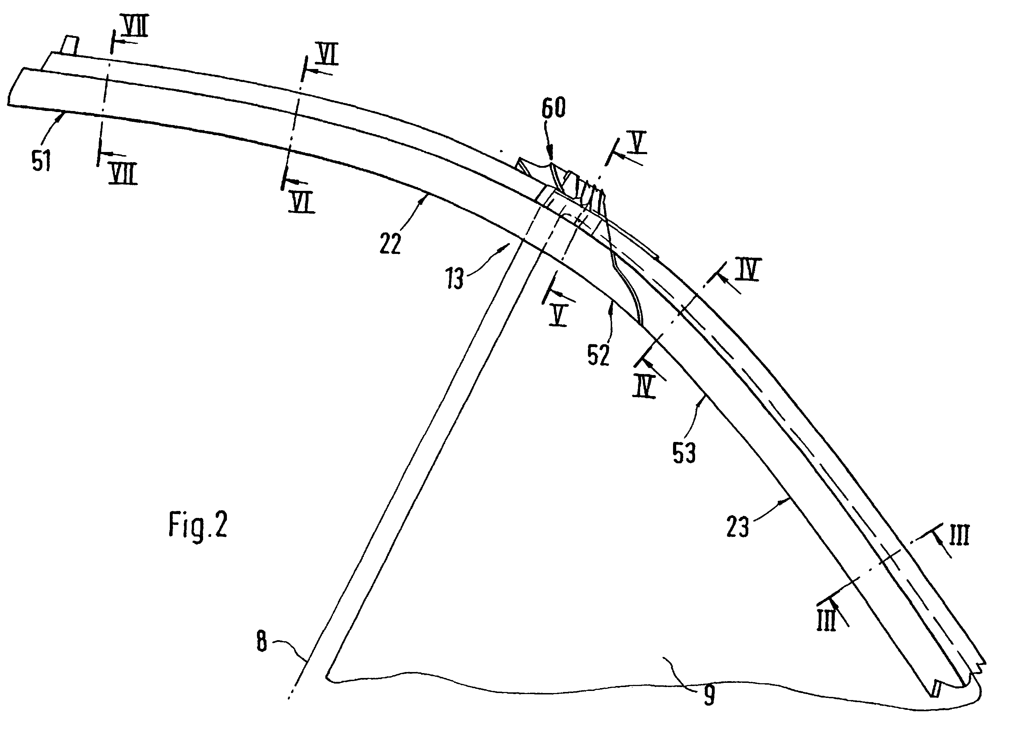

- Fig. 2: eine Teilseitenansicht auf die beiden angrenzenden seitlichen Sichtscheiben und die Dichtungseinrichtung,

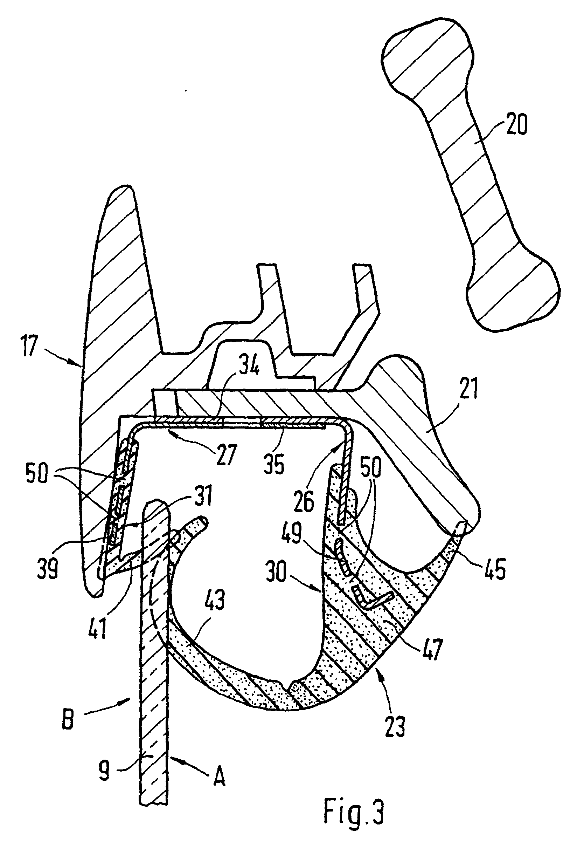

- Fig. 3: einen Schnitt nach der Linie III-III der Fig. 2 in größerer Darstellung,
- Fig. 4: einen Schnitt nach der Linie IV-IV der Fig. 2 in größerer Darstellung,

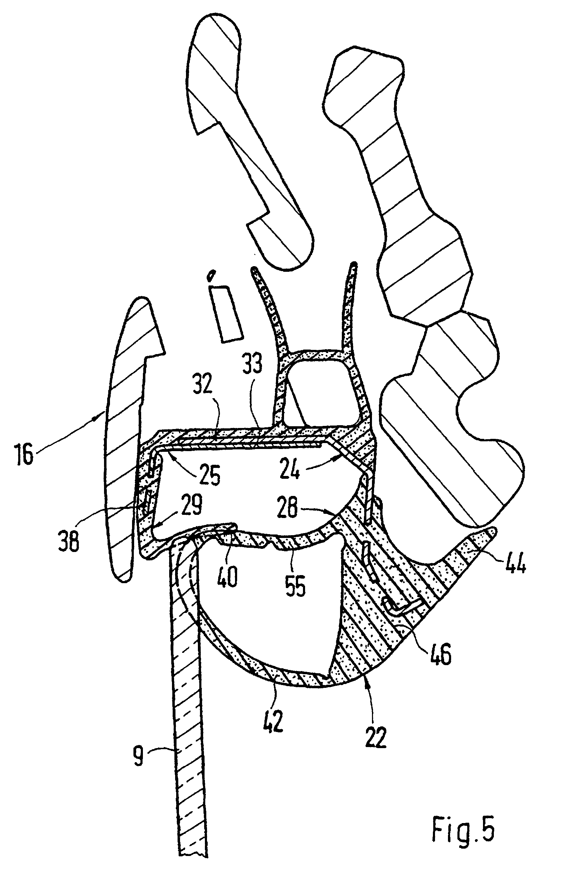

- Fig. 5: einen Schnitt nach der Linie V-V der Fig. 2 in größerer Darstellung,

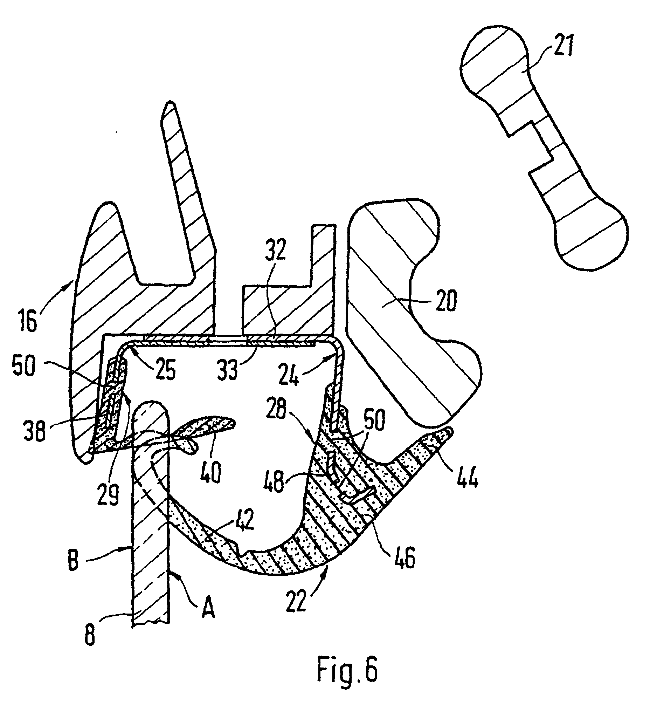

- Fig. 6: einen Schnitt nach der Linie VI-VI der Fig. 2 in größerer Darstellung,

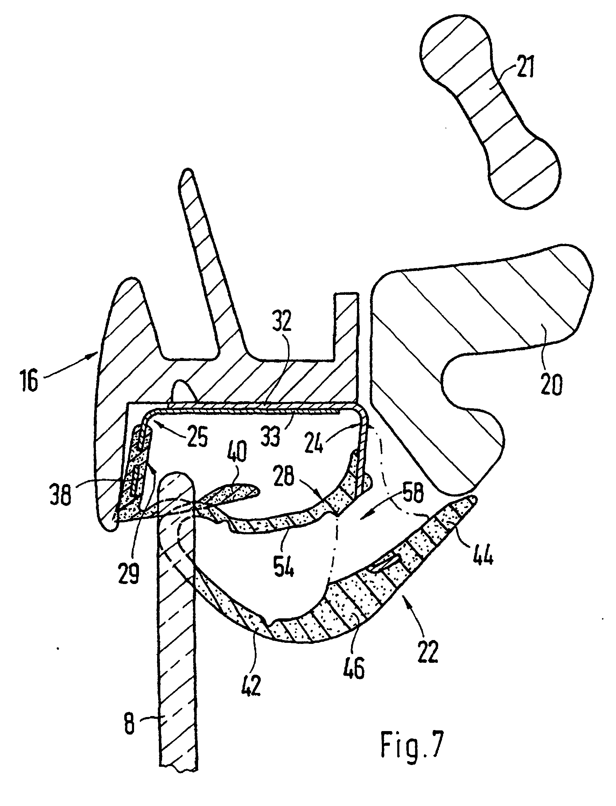

- Fig. 7: die Trägerschienen beider Dichtkörper in perspektivischer Darstellung,

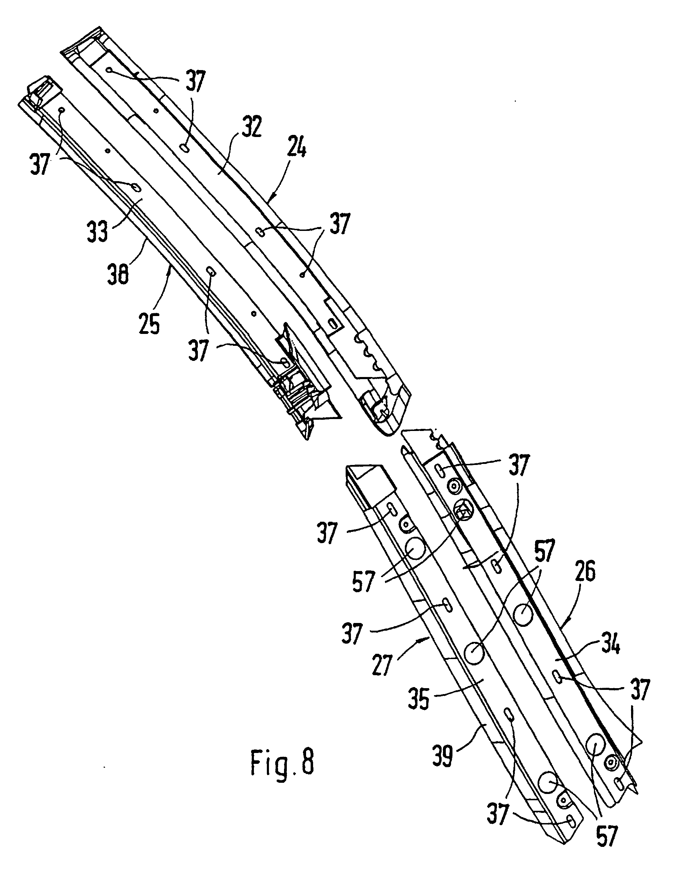

- Fig. 8: die innenliegende Trägerschiene des vorderen Dichtkörpers in perspektivischer Darstellung,

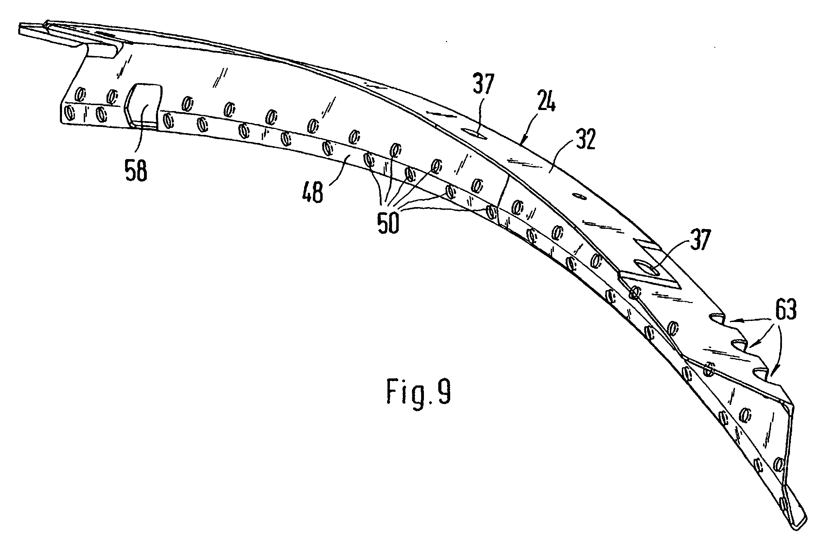

- Fig. 9: eine Teilseitenansicht auf den Übergangsbereich der beiden Dichtkörper und
- Fig. 10 bzw. Fig. 11: einen längsverlaufenden Vertikalschnitt durch den Übergangsbereich der beiden Dichtkörper.

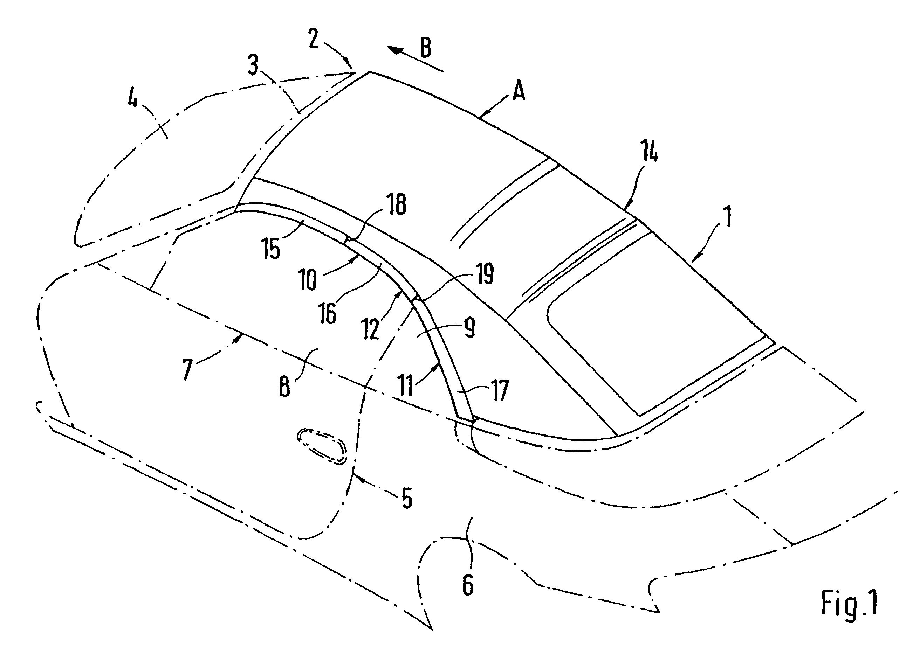

Fig. 1 zeigt einen Teilbereich eines Kraftfahrzeuges 1, dessen Aufbau 2 im dargestellten Bereich eine in einem Windschutzscheibenrahmen 3 aufgenommene Windschutzscheibe 4, seitliche Türen 5 und hintere Seitenteile 6 umfaßt. Oberhalb einer Gürtellinie 7 des Kraftfahrzeuges erstrecken sich - in Fahrzeuglängsrichtung gesehen - aneinandergesetzte Sichtscheiben 8, 9, wobei die Sichtscheibe 8 durch eine höhenverstellbare Türfensterscheibe und die Sichtscheibe 9 durch eine absenkbare bzw. verschwenkbare Fondfensterscheibe gebildet wird. Beide Sichtscheiben 8, 9 sind zumindest entlang ihrer oberen Begrenzungskanten 10, 11 rahmenlos ausgebildet.

Benachbart den oberen Begrenzungskanten 10 bzw. 11 der Sichtscheiben 8 bzw. 9 verläuft auf jeder Fahrzeuglängsseite ein seitlicher Dachrahmen 12, an dem eine Dichtungseinrichtung 13 vorgesehen ist, die bei geschlossenen, hochgefahrenen Sichtscheiben 8, 9 mit den oberen Randbereichen der Sichtscheiben 8, 9 zusammenwirkt.

Der seitliche Dachrahmen 12 kann einem feststehenden Aufbau, einem Hardtop oder einem Verdeck zugeordnet sein und ein- oder mehrteilig ausgebildet sein.

Im Ausführungsbeispiel ist oberhalb der Gürtellinie 7 ein Faltverdeck 14 vorgesehen, das sich aus einem am Aufbau 2 schwenkbar gelagerten Verdeckgestell und einem von diesem getragenen Verdeckbezug zusammensetzt. Der seitliche Dachrahmen 12 ist im Ausführungsbeispiel mehrteilig ausgebildet, wobei die Dachrahmenabschnitte 15, 16, 17 in Schließsteilung A des Faltverdecks 14 unter Bildung von schmalen Fugen 18, 19 konturbündig aneinandergesetzt sind. Der vordere Dachrahmenabschnitt 15 ist einstückig mit einem nicht näher gezeigten formsteifen vorderen Verdeckabschnitt des Verdeckgestells ausgebildet, wogegen der mittlere Dachrahmenabschnitt 16 und der hintere Dachrahmenabschnitt 17 von Lenkern 20, 21 des Verdeckgestells getragen werden. Der Dachrahmenabschnitt 16 ist am Lenker 20 und der Dachrahmenabschnitt 17 am Lenker 21 einstellbar befestigt.

Die Dichtungseinrichtung 13 umfaßt im Ausführungsbeispiel drei in Schließstellung des Faltverdecks 14 aneinandergesetzte Dichtkörper, wobei zumindest die an den Dachrahmenabschnitten 16 und 17 lösbar befestigten Dichtkörper 22, 23 jeweils zwei profilierte Trägerschienen 24, 25 bzw. 26, 27 umfassen und an jeder Trägerschiene 24, 25 bzw. 26, 27 ein durch abschnittsweises Umspritzen gebildeter Elastomerprofilstrang 28, 29, 30, 31 ausgebildet ist. Die Trägerschienen 24, 25 sind dem vorneliegenden Dichtkörper 22 und die Trägerschienen 26, 27 dem weiter hintenliegenden Dichtkörper 23 zugeordnet. Beide Trägerschienen 24, 25 bzw. 26, 27 jedes Dichtkörpers 22, 23 sind an gleichgerichteten Schenkeln 32, 33 bzw. 34, 35 örtlich miteinander verbunden. Dies kann durch Nieten, Schrauben, Kleben, Schweißen oder dergleichen erfolgen.

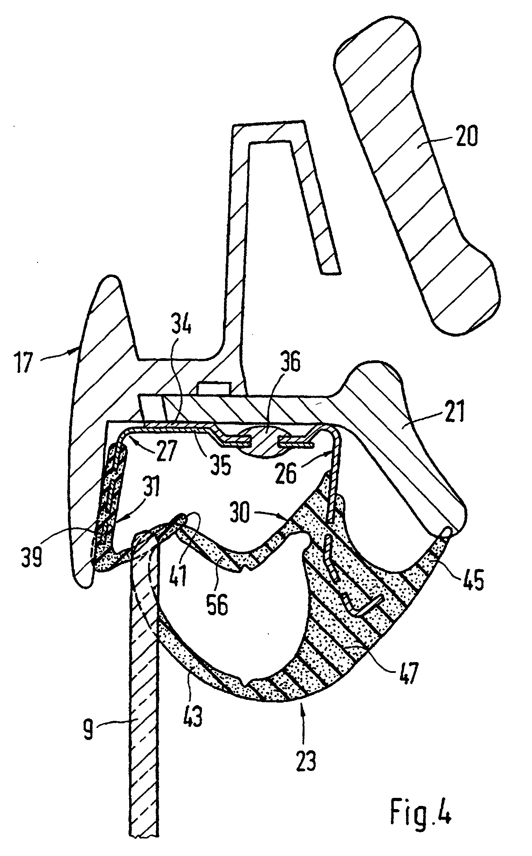

Im Ausführungsbeispiel sind die Trägerschienen 24, 25 bzw. 26, 27 beider Dichtkörper 22, 23 jeweils durch zwei beabstandete Niete 36 fest miteinander verbunden (siehe Fig. 4). Hierzu sind die Schenkel 32, 33 bzw. 34, 35 örtlich mit einer Ausprägung versehen.

Der Elastomerprofilstrang 28 ist an der Trägerschiene 24, der Elastomerprofilstrang 29 ist an der Trägerschiene 25, der Elastomerprofilstrang 30 ist an der Trägerschiene 26 und der Elastomerprofilstrang 31 ist an der Trägerschiene 27 durch jeweils abschnittsweise Umspritzen der Trägerschiene ausgebildet.

Die in Fahrzeugquerrichtung gesehen weiter außenliegenden Trägerschienen 25, 27 sind jeweils etwa L-förmig profiliert, wobei der nichtumspritzte Schenkel 33, 35 auf dem darüberliegenden Schenkel 32, 34 der innenliegenden Trägerschiene 24, 26 aufliegt. An beiden nichtumspritzten Schenkeln 32, 33 bzw. 34, 35 sind örtlich Öffnungen bzw. Langlöcher 37 ausgebildet, durch die Befestigungsschrauben zum einstellbaren Befestigen der Dichtkörper 22, 23 an den Dachrahmenabschnitten 16, 17 hindurchführbar und in Gewindebohrungen der Dachrahmenabschnitte 16, 17 eindrehbar sind. Vom freien Ende der umspritzten Schenkel 38, 39 ist jeweils ein dünnwandiger zur Sichtscheibe 8, 9 hin gerichteter Lippenabschnitt 40, 41 weggeführt, wobei der Lippenabschnitt 40, 41 in Konstruktionslage weiter nach innen ragt als die Innenseite A der Sichtscheibe 8, 9. Der Lippenabschnitt 40, 41 weist im Anschlußbereich an den umspritzten Schenkel 38, 39 innenseitig jeweils eine Querschnittsverringerung auf (Sollbiegestelle).

Das innenliegende Elastomerprofil 28, 30 weist jeweils eine erste zur Sichtscheibe 8, 9 hin gerichtete Dichtlippe 42, 43 und eine zweite, nach innen ragende Dichtlippe 44, 45 auf, wobei zwischen beiden Dichtlippen 42, 43 bzw. 44, 45 am Elastomerprofil 28, 30 im Bereich der abgewinkelten umspritzten Trägerschiene 24, 26 jeweils eine Querschnittserweiterung 46, 47 ausgebildet ist.

Die Trägerschienen 24, 25 bzw. 26, 27 weisen im Bereich der umspritzten Schenkel 38, 39 bzw. 48, 49 jeweils eine Vielzahl von kreisrunden Durchbrüchen 50 auf, wodurch eine innige Verbindung des angespritzten Elastomerprofilstranges 28, 29 bzw. 30, 31 mit der zugeordneten Trägerschiene 24, 25 bzw. 26, 27 erzielt wird.

Die den beiden Sichtscheiben 8, 9 zugewandten Bereiche (Lippenabschnitte 40, 41 bzw. Dichtlippen 42, 43 der Elastomerprofilstränge) liegen bei montierten Dichtkörpern 22, 23 bereichsweise aufeinander auf und überlappen sich in Fahrzeugquerrichtung gesehen bereichsweise.

Die beiden Dichtkörper 22, 23 weisen jeweils in einem wesentlichen Teilbereich ihrer Längserstreckung ein gleichbleibendes Querschnittsprofil auf. Lediglich an vorderen und/oder hinteren Endbereichen der Dichtkörper 22, 23 sind spezielle Formteile 51, 52, 53 vorgesehen.

Im Ausführungsbeispiel ist die der Sichtscheibe 8, 9 zugekehrten Dichtlippe 42, 43 des inneren Elastomerprofilstranges 28, 30 im Bereich der Formteile 51, 52, 53 durch einen inneren Steg 54, 55, 56 zu einem geschlossenen Hohlprofil ergänzt, wodurch der vordere Dichtkörper 22 an beiden Endbereichen und der hintere Dichtkörper 23 an seinem oberen Ende zusätzlich ausgesteift sind.

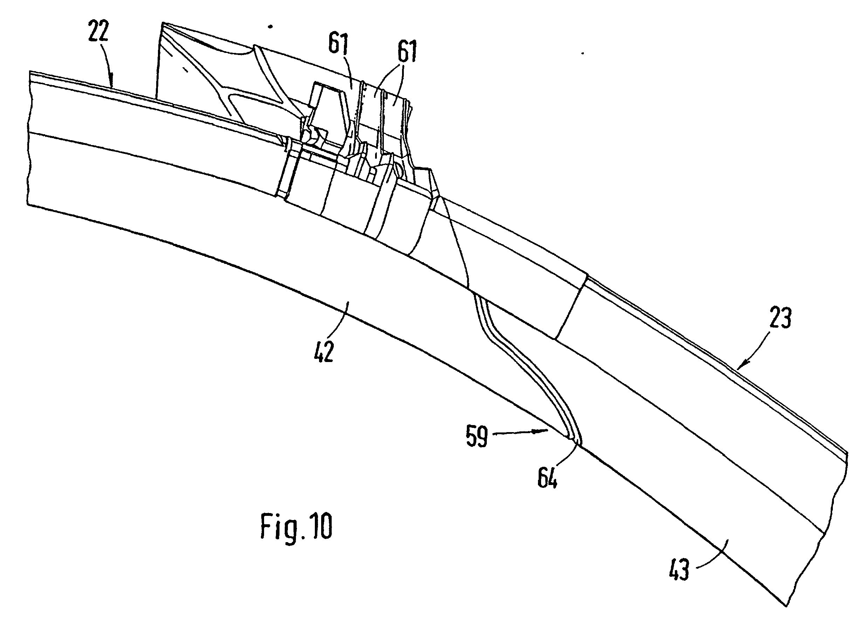

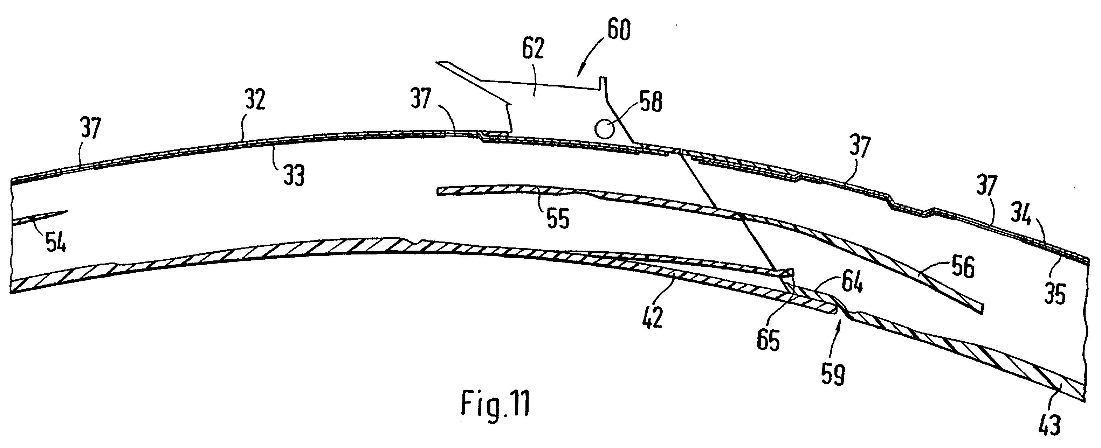

Zumindest an einem Dichtkörper z.B. 23 sind im Bereich der nicht umspritzten Schenkel 34, 35 der Trägerschienen 34,35 kreisrunde Montageöffnungen 57 ausgebildet, so daß die Befestigungsschrauben für die Festlegung der Dichtkörper 23 an den Dachrahmenabschnitten 17 bei montierten Dichtkörpern 23 frei zugänglich sind. An zumindest einem Dichtkörper 22 ist eine Ablauföffnung 58 zur Abführung von Kriechwasser vorgesehen. Die beiden Dichtkörper 22, 23 überlappen sich in einem gemeinsamen Verbindungsbereich 59 - in Längsrichtung gesehen - abschnittsweise (Fig. 10 und 11).

Der vorneliegende Dichtkörper 22 weist an seiner Oberseite an ein aufgesetztes Formteil 60 auf, an dem aneinandergesetzte querverlaufende Kanäle 61 zur seitlichen Wasserabführung und längsverlaufende dünnwandige Lippenabschnitte 62 ausgebildet sind, wobei das Formteil 60 mit beiden darüberliegenden Dachrahmenabschnitten 16, 17 in Wirkverbindung steht. Das Formteil 60 ist einstückig mit einer Trägerschiene 25 verbunden und wird mittels Umschlag auf die zweite Trägerschiene 24 aufgeklebt. Verprägungen 63 an den Trägerschienen z.B. 24 dienen zu deren Versteifung und zur Justierung der Dichtkörper 22, 23. Das hintere Ende der Dichtlippe 42 liegt auf einem abgesetzten inneren Abschnitt 64 der Dichtlippe 43 auf. Ferner umfaßt der vordere Dichtkörper 22 benachbart des Abschnitts 64 eine innenliegende Versteifungslippe 65.

## Patentansprüche

1. Dichtungseinrichtung für zumindest eine rahmenlose Sichtscheibe (8, 9) eines Kraftfahrzeuges, die wenigstens einen Dichtkörper (22, 23) mit zumindest einer eingebetteten Trägerschiene (24, 25 bzw. 26, 27) umfaßt, wobei durch abschnittsweises Umspritzen der zumindest einen Trägerschiene gebildete, mit der Innenseite und der Außenseite der Sichtscheibe zusammenwirkende Elastomerprofilstränge (28, 29 bzw. 30, 31) vorgesehen sind, **dadurch gekennzeichnet, daß** dem mit der Innenseite (A) der Sichtscheibe (8, 9) und dem mit der Außenseite (B) der Sichtscheibe (8, 9) zusammenwirkenden Elastomerprofilstrang (28, 29 bzw. 30, 31) jedes Dichtkörpers (22, 23) jeweils eine separate Trägerschiene (24, 25 bzw. 26, 27) zugeordnet ist, daß beide Trägerschienen (24, 25 bzw. 26, 27) an gleichgerichteten übereinanderliegenden Schenkeln (32, 33 bzw. 34, 35) miteinander verbunden sind und daß sich bei montierten Dichtkörpern (22, 23) die mit der Sichtscheibe (8, 9) in Wirkverbindung stehenden Bereiche der Elastomerprofilstränge (28, 29 bzw. 30, 31) in Fahrzeugquerrichtung abschnittsweise überlappen.

2. Dichtungseinrichtung nach Anspruch 1, **dadurch gekennzeichnet, daß** beide Trägerschienen (24, 25 bzw. 26, 27) des Dichtkörpers (22, 23) durch Nieten, Schrauben, Kleben, Schweißen oder dergleichen miteinander verbunden sind.

3. Dichtungseinrichtung nach einem der vorangegangenen Ansprüche, **dadurch gekennzeichnet, daß** die in Fahrzeugquerrichtung gesehen weiter außenliegende Trägerschiene (25, 27) etwa L-förmig profiliert ist, wobei der nichtumspritzte Schenkel (33, 35) auf dem darüberliegenden Schenkel (32, 34) der innenliegenden Trägerschiene (24, 26) aufliegt.

4. Dichtungseinrichtung nach den Ansprüchen 1 und 2, **dadurch gekennzeichnet, daß** vom freien Ende des umspritzten Schenkels (38, 39) der außenliegenden Trägerschiene (25, 27) ein verlagerbarer dünnwandiger Lippenabschnitt (40, 41) weggeführt ist.

5. Dichtungseinrichtung nach einem der vorangegangenen Ansprüche, **dadurch gekennzeichnet, daß** der innenliegende Elastomerprofilstrang (28, 30) eine erste zur Sichtscheibe (8, 9) hin gerichtete Dichtlippe (42, 43) und eine zweite nach innen ragende Dichtlippe (44, 45) umfaßt, wobei zwischen beiden Dichtlippen 42, 43 bzw. 44, 45) am Elastomerprofilstrang (28, 30) im Bereich der abgewinkelten umspritzten Trägerschiene (24, 26) eine Querschnittserweiterung (46, 47) vorgesehen ist.

6. Dichtungseinrichtung nach einem der vorangegangenen Ansprüche, **dadurch gekennzeichnet, daß** die Trägerschienen (24, 25 bzw. 26, 27) im Bereich der umspritzten Schenkel (32, 33 bzw. 34, 35) eine Vielzahl von Durchbrüchen (50) aufweisen.

7. Dichtungseinrichtung nach Anspruch 1, **dadurch gekennzeichnet, daß** die der zumindest einen Sichtscheibe (8, 9) zugewandten Bereiche (Lippenabschnitte 40, 41, Dichtlippen 42, 43 bzw. Formteile 52, 53) der Elastomerprofilstränge (28, 30) im Einbauzustand der Dichtungseinrichtung (13) bereichsweise aufeinanderliegen und sich - in Fahrzeugquerrichtung gesehen - abschnittsweise überlappen.

8. Dichtungseinrichtung nach Anspruch 1, **dadurch gekennzeichnet, daß** sie zumindest zwei aneinandergesetzte Dichtkörper (22, 23) umfaßt, die an von Lenkern (20, 21) eines Verdeckgestänges getragenen Dachrahmenabschnitten (16, 17) befestigt sind, wobei sich die Dichtkörper (22, 23) in einem gemeinsamen Verbindungsbereich (59) abschnittsweise überlappen.

9. Dichtungseinrichtung nach einem oder mehreren der vorangegangenen Ansprüche, **dadurch gekennzeichnet, daß** der vorneliegende Dichtkörper (22) an seiner Oberseite ein aufgesetztes Formteil (60) aufweist, an den aneinandergesetzte querverlaufende Kanäle (61) zur Wasserabführung und längsverlaufende Lippenabschnitte (62) ausgebildet sind, wobei das Formteil (60) mit beiden darüberliegenden Dachrahmenabschnitten (16, 17) in Wirkverbindung steht.

10. Dichtungseinrichtung nach einem der vorangegangenen Ansprüche, daß die der Sichtscheibe (8, 9) zugekehrte Dichtlippe (42, 43) des inneren Elastomerprofilstranges (28, 30) an Endbereichen des Dichtkörpers (22, 23) durch einen querverlaufenden inneren Steg (54, 55, 56) zu einem geschlossenen Hohlprofil ergänzt ist.

11. Dichtungseinrichtungn nach einem der vorangegangenen Ansprüche, **dadurch gekennzeichnet, daß** an zumindest einem Dichtkörper (z.B. 22) eine Ablauföffnung (58) zur Abführung von Kriechwasser vorgesehen ist.

12. Dichtungseinrichtung nach einem der vorangegangenen Ansprüche, **dadurch gekennzeichnet, daß** an zumindest einem Dichtkörper (z.B. 23) im Bereich der nicht umspritzten Schenkel der Trägerschienen (34, 35) Montageöffnungen (57) ausgebildet sind.

## Claims

1. A sealing device for at least one frame-less window pane (8, 9) of a motor vehicle, comprising at least one sealing member (22, 23) with at least one embedded support rail (24, 25 and 26, 27 respectively), wherein profiled elastomer billets (28, 29 and 30, 31 respectively) formed by partially injecting around the at least one support rail and cooperating with the inside and the outside of the window pane are provided, **characterized in that a** separate respective support rail (24, 25 and 26, 27 respectively) is associated in each case with the profiled elastomer billet (28, 29 and 30, 31 respectively) of each sealing member (22, 23) cooperating with the inside (**A**) of the window pane (8, 9) and cooperating with the outside (**B**) of the window pane (8, 9), the two support rails (24, 25 and 26, 27 respectively) are connected to each other on arms (32, 33 and 34, 35 respectively) orientated in the same direction and situated one above the other, and when the sealing members (22, 23) are assembled the regions of the profiled elastomer billets (28, 29 and 30, 31 respectively) operatively connected to the window pane (8, 9) overlap in part in the transverse direction of the vehicle.

2. A sealing device according to Claim 1, **characterized in that** the two support rails (**24,** 25 and 26, 27 respectively) of the sealing member (22, 23) are connected to each other by riveting, bolting, adhesion, welding or the like.

3. A sealing device according to one of the preceding Claims, **characterized in that** the support rail (25, 27) situated further towards the outside as viewed in the transverse direction of the vehicle is profiled substantially in an L-shape, wherein the arm (33, 35) which has not had injection moulding around it rests against the arm (32, 34) - situated above it - of the support rail (24, 26) situated on the inside.

4. A sealing device according to Claims 1 and 2, **characterized in that** a displaceable thinwalled lip portions (40, 41) extends from the free end of the arm (38, 39) - with injection moulding around it - of the support rail (25, 27) situated on the outside.

5. A sealing device according to one of the preceding Claims, **characterized in that** the profiled elastomer billet (28, 30) situated on the inside has a first sealing lip (42, 43) directed towards the window pane (8, 9) and a second sealing lip (44, 45) projecting inwards, wherein a cross-sectional enlargement (46, 47) is provided between the two sealing lips (42, 43 and 44, 45 respectively) on the profiled elastomer billet (28, 30) in the region of the angled support rail (24, 26) with injection moulding around it.

6. A sealing device according to one of the preceding Claims, **characterized in that** in the region of the arm (32, 33 and 34, 35 respectively) with injection moulding around it the support rails (24, 25 and 26, 27 respectively) have a plurality of apertures (50).

7. A sealing device according to Claim 1, **characterized in that** the regions (lip portions 40, 41, sealing lips 42, 43 and moulded parts 52, 53 respectively) of the profiled elastomer billets (28, 30) facing the at least one window pane (8, 9) rest one upon the other in part in the fitted state of the sealing device (13) and - as viewed in the transverse direction of the vehicle - overlap in part.

8. A sealing device according to Claim 1, **characterized in that** it comprises at least two sealing members (22, 23) arranged next to each other and secured to roof-frame portions (16, 17) supported by control arms (20, 21) of a folding-top linkage, wherein the sealing members (22, 23) overlap in part in a common connexion region (59).

9. A sealing device according to one or more of the preceding Claims, **characterized in that** the top side of the sealing member (22) situated at the front has a moulded part (60) which is mounted thereon and on which ducts (61) arranged next to one another and extending transversely for water removal and lip portions (62) extending longitudinally are formed, wherein the moulded part (60) is operatively connected to the two roof-frame portions (16, 17) situated thereabove.

10. A sealing device according to one of the preceding Claims, **characterized in that** the sealing lip (42, 43) of the inner profiled elastomer billet (28, 30) facing the window pane (8, 9) is enlarged at end regions of the sealing member (22, 23) by a transversely extending inner web (54, 55, 56) to form a closed hollow section.

11. A sealing device according to one of the preceding Claims, **characterized in that** a drainage opening (58) for the removal of penetrating water is provided on at least one sealing member (for example 22).

12. A sealing device according to one of the preceding Claims, **characterized in that** assembly openings (57) are formed on at least one sealing member (for example 23) in the region of the arms of the support rails (34, 35) which have not had injection moulding around them.

## Revendications

1. Dispositif d'étanchéité au moins pour une vitre (8, 9) sans cadre d'un véhicule automobile, qui comprend au moins un corps d'étanchéité (22, 23) avec au moins un rail porteur (24, 25 ou 26, 27), dans lequel sont prévus des profilés en élastomère (28, 29 ou 30, 31) qui sont formés par enrobage par injection, par endroits, du ou des rails porteurs et qui coopèrent avec le côté intérieur et le côté extérieur de la vitre, **caractérisé en ce qu'**au profilé en élastomère (28, 29, ou 30, 31), qui coopère avec le côté intérieur (A) de la vitre (8, 9) et avec celui qui coopère avec le côté extérieur (B) de la vitre (8, 9) de chaque corps d'étanchéité (22, 23) est associé un rail porteur (24, 25 ou 26, 27) séparé, **en ce que** les deux rails porteurs (24, 25 ou 26, 27) sont reliés l'un à l'autre par des ailes (32, 33 ou 34, 35) superposées et dirigées dans le même sens, et **en ce que** des zones des profilés en élastomère (28, 29 ou 30, 31), qui sont en liaison active avec la vitre (8, 9) lorsque les corps d'étanchéité (22, 23) sont montés, se recouvrent par endroits dans la direction transversale du véhicule.

2. Dispositif d'étanchéité selon la revendication 1, **caractérisé en ce que** les deux rails porteurs (24, 25 ou 26, 27) du corps d'étanchéité (22, 23) sont reliés l'un à l'autre par rivetage, vissage, collage, soudage ou similaire.

3. Dispositif d'étanchéité selon l'une des revendications précédentes, **caractérisé en ce que** le rail porteur (25, 27) situé plus loin à l'extérieur, dans la direction transversale du véhicule, est profilé approximativement en L, l'aile non enrobée (33, 35) reposant sur l'aile (32, 34) située au-dessus du rail porteur (24, 26) situé à l'intérieur.

4. Dispositif d'étanchéité selon les revendications 1 et 2, **caractérisé ce qu'**une partie de lèvre (40, 41) à paroi mince, déplaçable, s'étend dans la direction opposée à l'extrémité libre de l'aile (38, 39) enrobée du rail porteur (25, 27) situé à l'extérieur.

5. Dispositif d'étanchéité selon l'une des revendications précédentes, **caractérisé en ce que** le profilé en élastomère (28, 30) situé à l'intérieur comprend une première lèvre d'étanchéité (42, 43), dirigée vers la vitre (8, 9), et une deuxième lèvre d'étanchéité (44, 45) s'étendant vers l'intérieur, un élargissement de la section (46, 47) étant prévu entre les deux lèvres d'étanchéité (42, 43, ou 44, 45) sur le profilé en élastomère (28, 30), dans la zone du rail porteur (24, 26) enrobé et coudé.

6. Dispositif d'étanchéité selon l'une des revendications précédentes, **caractérisé en ce que** les rails porteurs (24, 25 ou 26, 27) présentent un grand nombre d'ajours (50), dans la zone des ailes enrobées (32, 33 ou 34, 35).

7. Dispositif d'étanchéité selon la revendication 1, **caractérisé en ce qu'**en en position montée du dispositif d'étanchéité (13), les zones (parties de lèvre 40, 41, lèvres d'étanchéité 42, 43 ou éléments façonnés 52, 53) des profilés en élastomère (28, 30), tournées vers au moins une vitre (8, 9), reposent l'une sur l'autre, par endroits, et se recouvrent par endroits vues dans la direction transversale du véhicule.

8. Dispositif d'étanchéité selon la revendication 1, **caractérisé en ce qu'**il comprend au moins deux corps d'étanchéité (22, 23) placés l'un contre l'autre, qui sont fixés à des parties (16, 17) du cadre de toit, portées par des bras oscillants (20, 21) d'une tringlerie de capote, les corps d'étanchéité (22, 23) se recouvrant par endroits dans une zone de liaison (59) commune.

9. Dispositif d'étanchéité selon une ou plusieurs des revendications précédentes, **caractérisé en ce que** le corps d'étanchéité (22) situé à l'avant comporte, sur son côté supérieur, un élément façonné (60) placé dessus sur lequel sont formés des canaux (61) d'évacuation d'eau, s'étendant transversalement et juxtaposés, ainsi que des parties de lèvre (62) s'étendant longitudinalement, l'élément façonné (60) étant en liaison active avec les deux parties (16, 17) du cadre de toit situées au-dessus.

10. Dispositif d'étanchéité selon l'une des revendications précédentes, **caractérisé en ce que** la lèvre d'étanchéité (42, 43), tournée vers la vitre (8, 9), du profilé en élastomère (28, 30) intérieur, est complétée, dans des zones terminales du corps d'étanchéité (22, 23), par une languette intérieure (54, 55, 56) s'étendant transversalement, pour former un profilé creux fermé.

11. Dispositif d'étanchéité selon l'une des revendications précédentes, **caractérisé en ce qu'**il est prévu une ouverture d'écoulement (58) sur au moins un corps d'étanchéité (par exemple 22), pour évacuer l'eau stagnante.

12. Dispositif d'étanchéité selon l'une des revendications précédentes, **caractérisé en ce que** des ouvertures de montage (57) sont pratiquées sur au moins un corps d'étanchéité (par ex. 23), dans la zone des ailes non enrobées des rails porteurs (34, 35).
